# EUROPEAN PATENT SPECIFICATION

(11) **EP 4 450 299 B1**
(45) Date of publication and mention of the grant of the patent: **08.04.2026**
(21) Application number: 22906890.3
(22) Date of filing: 16.05.2022
(51) Int. Cl.: B60C 9/20, B60C 9/22, B60C 11/03, B60C 9/28, B60C 11/12, B60C 11/13

(54) **TIRE**
REIFEN
PNEUMATIQUE

(30) Priority: 14.12.2021 JP 2021202728
(43) Date of publication of application: 23.10.2024
(73) Proprietor: BRIDGESTONE CORPORATION, Chuo-ku Tokyo 104-8340 (JP)
(72) Inventor: KIDA, Hideka, Tokyo 104-8340 (JP)
(74) Representative: Marks & Clerk LLP
(86) International application number: PCT/JP2022/020436
(87) International publication number: WO 2023/112353

(56) References cited:
- WO-A1-2011/013357
- WO-A1-2013/042256
- WO-A1-2021/250331
- WO-A1-2022/177031
- JP-A- 2001 121 919
- JP-A- 2001 121 919
- JP-A- 2008 195 360
- JP-A- 2009 298 262
- JP-A- 2010 116 143
- JP-A- 2012 126 214
- JP-A- 2017 222 190
- JP-A- 2019 108 083

## Description

### TECHNICAL FIELD

This invention relates to a tire.

This application claims priority based on Japanese Patent Application No. 2021-202728 filed in Japan on December 14, 2021.

### BACKGROUND

There are conventional tires with an intersecting belt layer and a circumferential belt layer (e.g., PTL 1).

### CITATION LIST

### Patent Literature

PTL 1: JP 2012-071665 A
PTL 2: JP2001121919A which discloses a pneumatic radial tire that comprises a carcass as a skeleton extended over a pair of bead cores and formed with cord plies arranged in a radial direction, at least two layers of belt and tread arranged in sequence outside in the radial direction of the carcass and a plurality of peripheral grooves formed in the surface of the tread. The tread is formed in a split structure with at least two types of rubbers arrayed in a tire cross direction, and a split interface extending along a tire equator plane between the different types of rubbers is isolated 2 mm or more from the centers of the opening widths of the peripheral grooves to the tire cross direction.
PTL3: WO2021250331A1 which discloses a tyre for a private passenger vehicle that comprises an axially central portion and axially lateral portions. The axially central portion and each axially lateral portion meet only one of conditions I, II, III: I - the portion does not comprise any transverse cut; II - the portion comprises N transverse cuts arranged such that π x OD / N ≥ 40 mm; - III - the portion comprises N transverse cuts arranged such that π x OD / N ≤ 24 mm, condition I or II being met by the axially central portion or by an axially lateral portion, condition III being met by the axially central portion or by an axially lateral portion.
PTL 4: WO2022177031A1 which discloses a tire that comprises: a pair of bead cores; a carcass layer stretched over the bead cores; and a belt layer disposed radially outward of the carcass layer. The tire outer diameter OD (mm) is in a range of 200 ≤ OD ≤ 660, and the tire total width SW (mm) is in a range of 100 ≤ SW ≤ 400. The belt layer has a pair of crossing belts made from a wide-width crossing belt and a narrow-width crossing belt. A distance Tce (mm) from a tread profile of a tire equatorial surface CL to the outer peripheral surface of the wide-width crossing belt has a relationship of 0.008 ≤ Tce/OD ≤ 0.130 with respect to the tire outer diameter OD (mm).

### SUMMARY

### (Technical Problem)

However, in the conventional tires as described above, there is room for improvement in terms of uneven wear resistance performance.

It is an object of this invention to provide a tire that can improve uneven wear resistance performance.

### (Solution to Problem)

A tire comprising a belt and a tread surface according to claim 1.

### (Advantageous Effect)

According to the present invention, it is possible to provide a tire that can improve uneven wear resistance performance.

### BRIEF DESCRIPTION OF THE DRAWINGS

In the accompanying drawings:
FIG. 1 is a cross-sectional view in the tire width direction, schematically illustrating a tire according to one embodiment of this invention;
FIG. 2 is a plan view schematically illustrating a developed view of the tread surface of the tire in Figure 1;
FIG. 3 is a cross-sectional view in the tire width direction, illustrating an enlarged portion of the tire in Figure 1;
FIG. 4 is an explanatory drawing for explaining an example of a circumferential belt cord that can be suitably applied to tires according to any embodiments of the present invention;
FIG. 5 is an explanatory drawing for explaining the behavior of the tire in Figure 1 under load;
FIG. 6 is a drawing corresponding to Figure 3 and is a cross-sectional view in the tire width direction, illustrating an enlarged portion of a tire of another embodiment of this invention;
FIG. 7 is an explanatory drawing for explaining the behavior of the tire in Figure 6 under load;
FIG. 8 is an explanatory drawing for explaining the tension acting on the belts of the tire in the embodiment in Figure 1 and the tire according to one reference example, respectively; and
FIG. 9 is an explanatory drawing for explaining the behavior of the tire according to another reference example under load.

### DETAILED DESCRIPTION

The tire of the present invention can be used for any type of pneumatic tires, but can suitably be used for heavy-duty pneumatic tires, and even more suitably for truck and bus pneumatic tires.

The following is an illustrative description of an embodiment of the tire according to this invention, with reference to the drawings.

The following is an illustrative description of an embodiment of the tire according to the present invention, with reference to the drawings.

In each figure, common components and parts are marked with the same reference numerals. In each figure, the tire width direction, the outer side in the tire width direction, and the inner side in the tire width direction are indicated by the signs "WD", "WDO", and "WDI", respectively; the tire radial direction, the outer side in the tire radial direction, and the inner side in the tire radial direction are indicated by the signs "RD", "RDO", and "RDI" respectively; and the tire circumferential direction is indicated by the sign "CD".

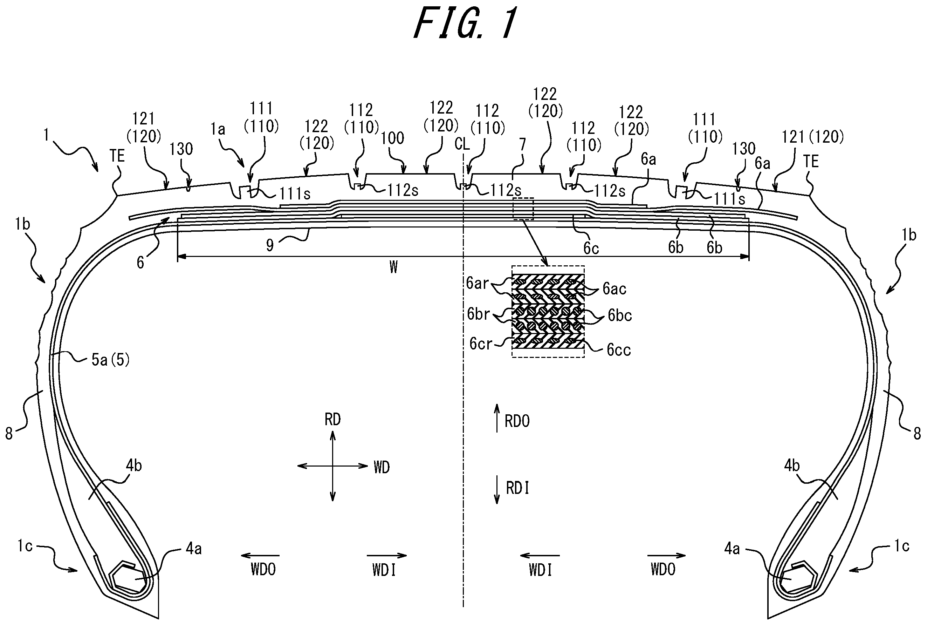

Figure 1 is a drawing for explaining a tire 1 according to an embodiment of the present invention. Figure 1 is a cross-sectional view in the tire width direction, schematically illustrating the tire 1 according to one embodiment of this invention.

The tire 1 of the embodiment in Figure 1 is configured as a heavy-duty pneumatic tire, more specifically, a truck and bus pneumatic tire. However, the tire 1 according to any embodiment of this invention may be configured as any type of tire.

As illustrated in Figure 1, the tire 1 comprises a tread portion 1a, a pair of sidewall portions 1b extending inward in the tire radial direction from both ends of the tread portion 1a in the tire width direction, and a pair of bead portions 1c provided at the inner end in the tire radial direction of each sidewall portion 1b. The bead portion 1c is configured to contact a rim on the inner side in the tire radial direction and on the outer side in the tire width direction when the tire 1 is mounted on the rim.

The tire 1 also comprises a pair of bead cores 4a, a pair of bead fillers 4b, a carcass 5, a belt 6, a tread rubber 7, side rubbers 8, and an inner liner 9.

Each of the bead cores 4a is embedded in the corresponding bead portion 1c. The bead core 4a comprises a plurality of bead wires whose surroundings are covered with rubber. The bead wires are suitably composed of metal (e.g. steel). The bead wires can, for example, be formed of monofilaments or stranded wires.

Each of the bead fillers 4b is located on the outer side in the tire radial direction relative to the corresponding bead core 4a. The bead filler 4b tapers toward the outer side in the tire radial direction. The bead filler 4b is composed of rubber, for example.

In general, the bead fillers are sometimes referred to as the "stiffeners".

The carcass 5 straddles between the pair of bead cores 4a and extends in a toroidal shape. The carcass 5 consists of one or more carcass plies 5a (one ply in the example in Figure 1). Each carcass ply 5a includes one or more carcass cords and coating rubber covering the carcass cords. The carcass cords can be formed of monofilaments or stranded wires.

The carcass cords 5c are suitably composed of metal (e.g., steel).

The carcass 5 suitably has a radial structure, but may also have a bias structure.

The side rubber 8 is located in the sidewall portion 1b. The side rubber 8 constitutes the outer surface of the sidewall portion 1b in the tire width direction. The side rubber 8 is located on the outer side in the tire width direction than the carcass 5. The side rubber 8 is located on the outer side in the tire width direction than the bead filler 4b. The side rubber 8 is formed integrally with the tread rubber 7.

The inner liner 9 is arranged on the tire inner side of the carcass 5, e.g., may be laminated to the tire inner side of the carcass 5. The inner liner 9 is made of butyl rubber with low air permeability, for example. The butyl rubber includes, for example, butyl rubber and its derivative, halogenated butyl rubber. The inner liner 9 is not limited to butyl rubber, but can be made of other rubber compositions, resins, or elastomers.

As illustrated in Figure 1, the belt 6 is arranged on the outer side in the tire radial direction relative to the crown of the carcass 5. The belt 6 has a plurality of belt layers 6a to 6c (five layers in the embodiment of Figure 1,). The belt 6 has, at least, a plurality of intersecting belt layers 6a and one or more circumferential belt layers 6b.

The plurality of intersecting belt layers 6a (two layers in the embodiment of Figure 1) each contains intersecting belt cords 6ac extending in a direction that intersects each other between layers, and an intersecting belt coating rubber 6ar covering the intersecting belt cords 6ac. The intersecting belt cords 6ac are so-called low-angle belt cords with a small angle with respect to the tire width direction. Specifically, the intersecting belt cords 6ac have an angle of 20° to 45°with respect to the tire width direction.

The intersecting belt cords 6ac can be formed of monofilaments or twisted wires. The intersecting belt cords 6ac are suitably composed of metal (e.g., steel), however, may also be composed of organic fibers made of polyester, nylon, rayon, aramid, etc.

The one or more circumferential belt layers 6b (two layers in the embodiment of Figure 1) each contains circumferential belt cords 6bc extending along the tire circumferential direction, and a circumferential belt coating rubber 6br covering the circumferential belt cords 6bc.

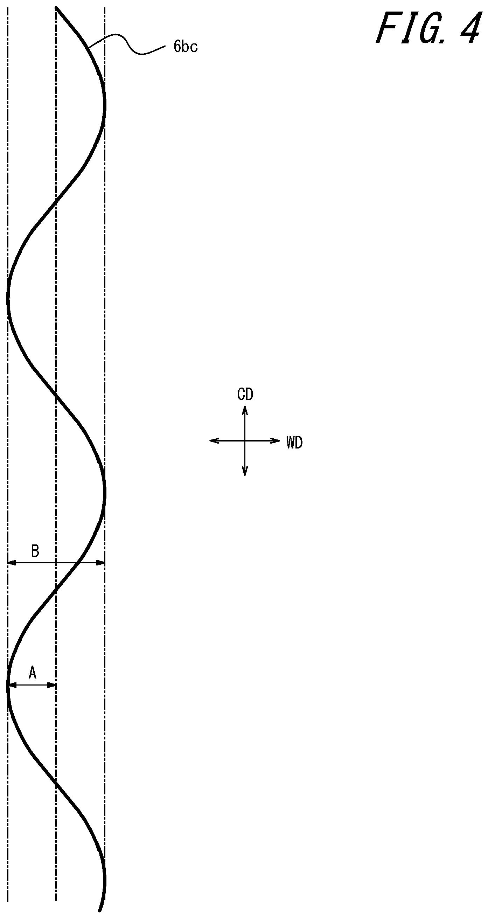

Regarding the circumferential belt cords 6bc, "extending along the tire circumferential direction" is not limited to the case extending parallel to the tire circumferential direction, but also includes the case extending in a direction greater than 0° and 5° or less with respect to the tire circumferential direction. Note, that when the circumferential belt cords 6bc have a wavy shape as described below (Figure 4), the extending direction of the circumferential belt cords 6bc refers to the extending direction of the amplitude centerline of the wavy shape formed by the circumferential belt cord 6bc.

The circumferential belt cords 6bc can be formed of monofilaments or twisted wires. The circumferential belt cords 6bc are suitably composed of metal (e.g., steel), however, may also be composed of organic fibers made of polyester, nylon, rayon, aramid, etc.

As illustrated in Figure 4, the circumferential belt cords 6bc are suitably so-called wavy cords having a wavy shape. In this case, the circumferential belt cords 6bc extend along the tire circumferential direction while amplifying in the tire width direction following the wavy shape. Here, the term "wavy shape" in this document is not limited to a wavy shape consisting of smooth curves as illustrated in Figure 4, but also includes a wavy shape consisting of broken lines. The circumferential belt cords 6bc are habituated (molded) into a wavy shape.

In general, the crown portion of tire is always subjected to tensile input in the tire circumferential direction due to internal pressure during use, and tends to be distorted by circumferential elongation due to creep from use. Therefore, by making the circumferential belt cords 6bc in wavy shape, separation can be effectively prevented without increasing the weight of the tire 1. This is especially true when the tire 1 is a heavy-duty pneumatic tire (e.g., a truck and bus pneumatic tire).

Both amplitudes B of the wavy shape formed by the circumferential belt cords 6bc are suitably 1.5 to 2.5mm, for example. Here, the "both amplitudes B of the wavy shape formed by the circumferential belt cords 6bc" is twice the single amplitude (amplitude) A of the wavy shape (Figure 4).

However, instead of being in a wavy shape, the circumferential belt cords 6bc may extend in a straight line along the tire circumferential direction.

As illustrated in Figure 1, the one or more circumferential belt layers 6b are suitably positioned on the inner side in the tire radial direction than the plurality of intersecting belt layers 6a. This makes it easier to maintain the shape of the tire when the tire is filled with internal pressure.

However, the positional relationship between the circumferential belt layers 6b and the intersecting belt layers 6a is arbitrary; for example, one or more circumferential belt layers 6b may be positioned on the outer side in the tire radial direction than the plurality of intersecting belt layers 6a.

As illustrated in Figure 1, at least one of the plurality of intersecting belt layers 6a (one layer in the embodiment of Figure 1) suitably has a wider width (tire widthwise length) than each circumferential belt layer 6b. Thereby, uneven wear can be suppressed.

In addition to the one or more circumferential belt layers 6b and the plurality of intersecting belt layers 6a, the belt 6 may have one or more other belt layers 6c (one layer in the embodiment of Figure 1). The other belt layers 6c may be positioned on the inner side in the tire radial direction than the one or more circumferential belt layers 6b and the plurality of intersecting belt layers 6a as illustrated in Figure 1, may be positioned between the circumferential belt layers 6b and the intersecting belt layers 6a, and/or may be positioned on the outer side in the tire radial direction than the one or more circumferential belt layers 6b and the plurality of intersecting belt layers 6a. In the embodiment of Figure 1, there is no other belt layers 6c interposed between the one or more circumferential belt layers 6b and the plurality of intersecting belt layers 6a.

The other belt layer 6c may be, for example, an inclined belt layer 6c. The inclined belt layer 6c includes inclined belt cords 6cc extending in an extending direction inclined to the tire circumferential direction, and an inclined belt coating rubber 6cr covering the inclined belt cords 6cc.

The inclined belt cords 6cc can be formed of monofilaments or twisted wires. The inclined belt cords 6cc are suitably composed of metal (e.g., steel), however, may also be composed of organic fibers made of polyester, nylon, rayon, aramid, etc.

The tread rubber 7 is located in the tread portion 1a, on the outer side of the belt 6 in the tire radial direction. The tread rubber 7 constitutes the tread surface 100, which is the outer surface of the tread portion 1a in the tire radial direction. A tread pattern is formed on the tread surface 100.

As used herein, the term "tread surface (100)" means the outer surface around the entire circumference of the tire that is in contact with the road surface when the tire is assembled on a rim, filled with prescribed internal pressure, and rolled under a maximum load.

As used herein, the term "the ground contact edge (TE)" means the edge in the tire width direction of the tread surface (100).

As used herein, the term "ground contact width" means the tire widthwise distance between a pair of ground contact edges of the tread surface

(100). As used herein, the term "rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the "rim" includes current sizes as well as future sizes to be listed in the aforementioned industrial standards. An example of the "size as described in the future" could be the sizes listed as "FUTURE DEVELOPMENTS" in the ETRTO 2013 edition.). For sizes not listed in these industrial standards, the term "rim" refers to a rim with a width corresponding to the bead width of the tire.

As used herein, the "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

The term "maximum load" shall mean the load corresponding to the above maximum load capacity.

Note, that the air as used herein can be replaced by inert gas such as nitrogen gas or other inert gas.

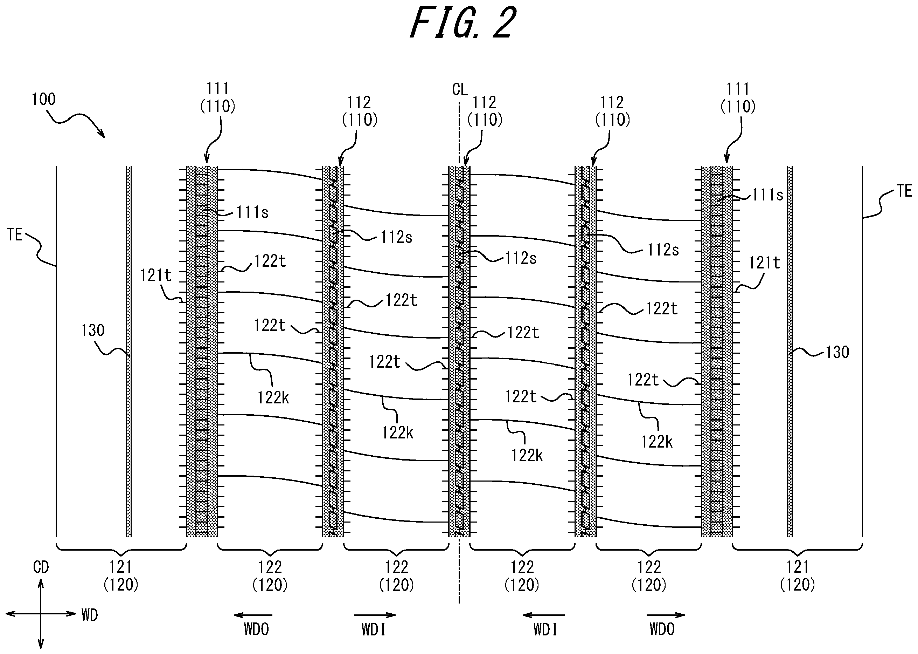

Figure 2 is a plan view schematically illustrating a developed view of the tread surface 100 of the tire 1 in Figure 1. In Figure 2, the interior of each groove, depressed inward in the tire radial direction from the tread surface 100, is indicated by dot hatches.

Herein, the "developed view of tread surface 100" refers to a planar view of the tread surface with the tread surface 100 expanded on a flat surface.

In this document, unless otherwise noted, the positional relationship and dimensions of each element of the tire 1 shall be measured in a "reference condition". The "reference condition" refers to the condition in which the tire 1 is assembled on the rim, filled with the prescribed internal pressure described above, and unloaded. The dimensions of the grooves, sipes, and other elements in the tread surface 100 shall be measured in the developed view of the tread surface 100.

As illustrated in Figures 1 to 2, in this embodiment, a plurality of main grooves 110 are provided on the tread surface 100. Each of the main grooves 110 extends continuously along the tire circumferential direction. The plurality of main grooves 110 include a pair of outermost main grooves 111 located at the outermost side in the tire width direction. This pair of outermost main grooves 111 are located on both sides of the tire equatorial plane CL. As in the embodiments of Figures 1 and 2, the plurality of main grooves 110 may include one or more (three in the embodiments of Figures 1 and 2) center main grooves 112 between the pair of outermost main grooves 111, or may include only one pair of outermost main grooves 111.

The groove width of the main groove 110 is suitably 6 mm or more, more suitably 7 mm or more, and even more suitably 8 mm or more. The groove width of the main groove 110 is suitably 12 mm or less, and more suitably 10 mm or less.

The groove depth of the main groove 110 is suitably 6 mm or more, more suitably 7 mm or more, and even more suitably 8 mm or more. The groove depth of the main groove 110 is suitably 12 mm or less, and more suitably 10 mm or less.

In this document, the "groove" is defined as the one having a groove width of 1.3 mm or more at the tread surface 100 in the above reference condition. In this embodiment, the groove includes the main groove 110 and an auxiliary groove 130. The groove width of the groove is suitably 1.5 mm or more. The "groove width" is the distance between a pair of groove walls facing each other, measured perpendicular to the extending direction of the groove, and may be constant or variable in the tire radial direction. The "groove" is preferably configured so that when the tire is mounted on the rim, filled with the prescribed internal pressure, and subjected to the maximum load, the pair of groove walls opposing each other do not come into contact with each other when the load is directly applied.

In this document, a "sipe" is defined as the one having a sipe width of less than 1.3 mm at the tread surface 100 in the above reference condition. In this embodiment, the sipe includes one-end-open sipes 121t and 122t, and two-end-open sipes 122k. The sipe width is suitably 1.0 mm or less, and more suitably 0.8 mm or less. The "sipe width" is the distance between a pair of sipe walls facing each other, measured perpendicular to the extending direction of the sipe. The "sipe" is suitably configured so that when the tire 1 is mounted on the rim, filled with the prescribed internal pressure, and subjected to the maximum load, the pair of opposing sipe walls contact each other at least in part when the load is directly applied.

As illustrated in Figures 1 and 2, the tread surface 100 is provided with a plurality (six in this embodiment) of land portions 120, defined by a plurality (five in this embodiment) of main grooves 110 and a pair of ground contact edges TE. These plurality of land portions 120 include a pair of shoulder land portions 121, which are defined between the pair of outermost main grooves 111 and a pair of ground contact edges TE. In addition, these plurality of land portions 120 further include one or more (four in this embodiment) center land portions 122, which are defined between the plurality of main grooves 110.

The shoulder land portion 121 is provided with the auxiliary groove 130. The auxiliary groove 130 is suitably provided in each shoulder land portion 121, as illustrated in Figures 1 and 2, however, may be provided in only one of the shoulder land portions 121. The auxiliary groove 130 has a narrower groove width than the main groove 110 and extends along the tire circumferential direction.

As illustrated in Figure 2, the auxiliary groove 130 suitably extends in a straight line.

In the following, when describing the auxiliary groove 130, an outermost end in tire width direction 6bg of the one or more circumferential belt layers 6b, the shoulder land portion 121, etc., unless otherwise noted, it is assumed that the configuration of the tire 1 when viewed one half of the tire 1 with respect to the tire equatorial plane CL will be described. The tire 1 suitably has a similar configuration when viewed from the other half of the tire 1 with respect to the tire equatorial plane CL.

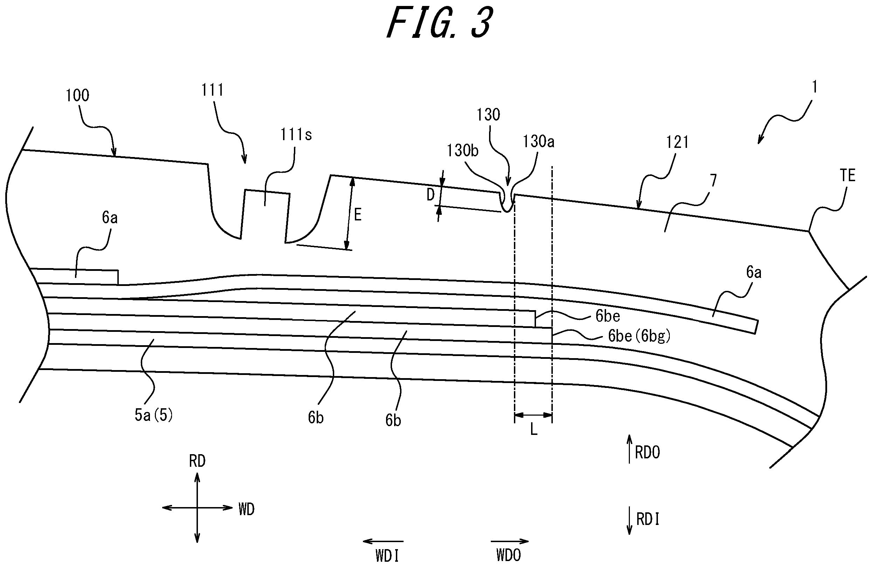

Figure 3 is an enlarged view of a portion illustrated in Figure 1. As illustrated in Figures 1 and 3, the outer end in the tire width direction 6be of at least one (one in the embodiment in Figure 1 and 3) circumferential belt layer 6b of the one or more circumferential belt layers 6b is located within the tire widthwise region corresponding to the shoulder land portion 121 (i.e., on the outer side in the tire width direction than the outermost main groove 111 and on the inner side in the tire width direction than the ground contact edge TE).

As illustrated in Figures 1 and 3, the outer end in the tire width direction 6be of each circumferential belt layer 6b is suitably located within the tire widthwise region corresponding to the shoulder land portion 121 (i.e., on the outer side in the tire width direction than the outermost main groove 111 and on the inner side in the tire width direction than the ground contact edge TE).

As illustrated in Figures 1 and 3, the outer end in the tire width direction of at least one (one in the embodiment in Figure 1 and 3) intersecting belt layer 6a of the plurality of intersecting belt layers 6a is suitably located within the tire widthwise region corresponding to the shoulder land portion 121 (i.e., on the outer side in the tire width direction than the outermost main groove 111 and on the inner side in the tire width direction than the ground contact edge TE).

As illustrated in Figure 3, of the pair of groove walls 130a and 130b facing each other in the auxiliary groove 130, the groove wall 130a located on the outer side in the tire width direction (hereinafter referred to as "outer groove wall 130a") is positioned on the inner side in the tire width direction than the outermost end in the tire width direction 6bg of the one or more circumferential belt layers 6b included in the belt 6.

Here, the "outermost end in the tire width direction 6bg of the one or more circumferential belt layers 6b" refers to the outermost end in the tire width direction 6be of the outer ends in the tire width direction 6be of each circumferential belt layer 6b.

Here, the effects of this embodiment will be explained.

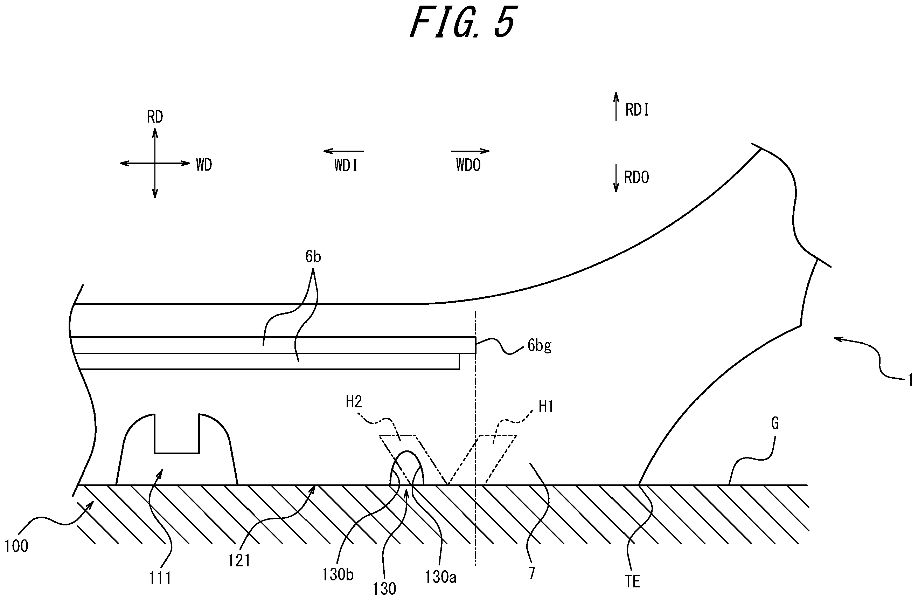

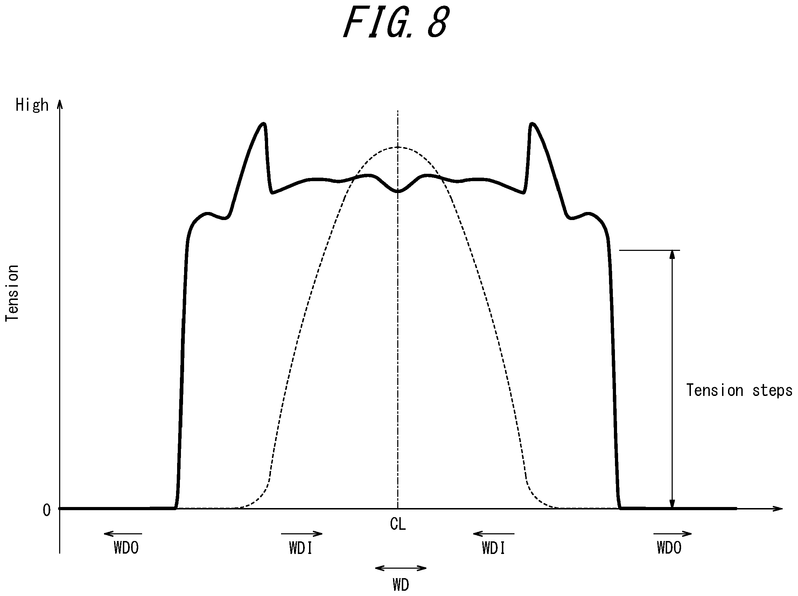

First, in this embodiment, as described above, the belt 6 has a plurality of intersecting belt layers 6a and the one or more circumferential belt layers 6b, and the intersecting belt cords 6ac of the intersecting belt layer 6a have a low angle (20° to 45° with respect to the tire width direction) (Figure 1). Due to this configuration of the belt 6, in which the intersecting angles between the belt cords of the plurality of belt layers are large (specifically, the intersecting angle between the circumferential belt cords 6bc of the circumferential belt layer 6b and the intersecting belt cords 6ac of the intersecting belt layer 6a is large), as indicated by the solid line in the graph in Figure 8, a large tension step occurs in the belt 6 at the vicinity of the outermost end in the tire width direction 6bg of the one or more circumferential belt layers 6b. In Figure 8, the solid line in the graph schematically indicates the tension acting on the belt 6 of the tire 1 in this embodiment. In Figure 8, the dashed line in the graph schematically indicates the tension acting on the belt of a tire for one conventional reference example, which has a belt with a small intersecting angle between the belt cords of a plurality of belt layers. As can be seen from the dashed line in the graph in Figure 8, there are few or no tension steps in belts of such conventional tire, and the tension decreases smoothly from the tire equatorial plane CL to the outer side in the tire width direction. As illustrated in Figure 5, when a load is applied to the tire 1 of this embodiment, the tread rubber 7 between the outermost end in the tire width direction 6bg of one or more circumferential belt layers 6b and the road surface G is compressed by the load, and the above tension step causes the phenomenon H1 to bulge and deform the tread rubber 7 between them outward in the tire width direction (hereinafter referred to as "outward crushing"). This outward crushing H1 may lead to uneven wear in the shoulder land portion 121. This outward crushing H1 is particularly noticeable when the tire 1 is a heavy-duty pneumatic tire (e.g., a truck and bus pneumatic tire).

Therefore, in this embodiment, the auxiliary groove 130 is provided in the shoulder land portion 121, on the tread surface 100, as described above. By providing the auxiliary groove 130, as illustrated in Figure 5, when a load is applied to the tire 1, the tread rubber 7 in the vicinity of the outer groove wall 130a of the auxiliary groove 130 is compressed by the load, and this causes the phenomenon H2 to bulge and deform the tread rubber 7 inward in the tire width direction (hereinafter referred to as "inward crushing"). As mentioned above, since the outer groove wall 130a of the auxiliary groove 130 is positioned on the inner side in the tire width direction than the outermost end in the tire width direction 6bg of the one or more circumferential belt layers 6b, the inward crushing H2 due to the outer groove wall 130a of the auxiliary groove 130 can offset the outward crushing H1 due to the outermost end in the tire width direction 6bg of the one or more circumferential belt layers 6b. Therefore, uneven wear at the shoulder land portion 121 can be suppressed, which in turn improves uneven wear resistance performance.

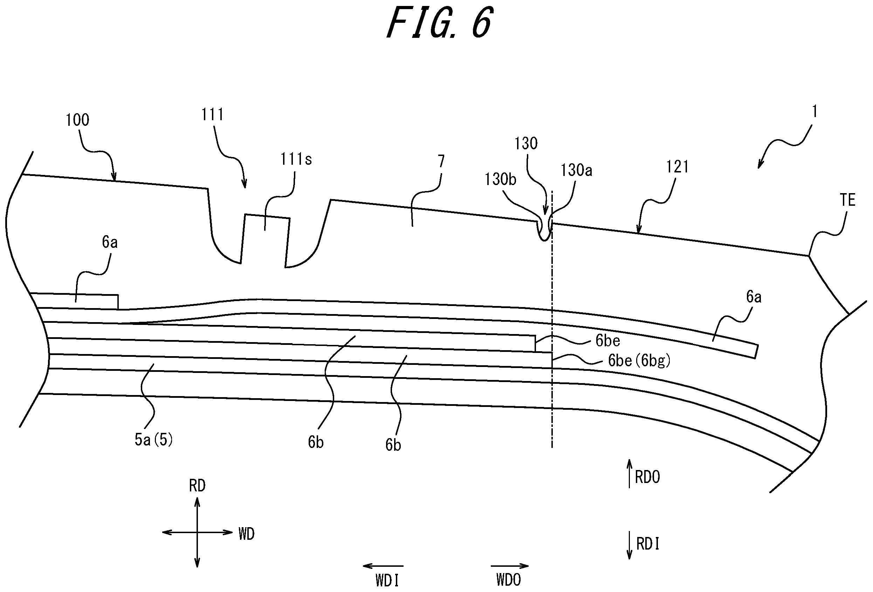

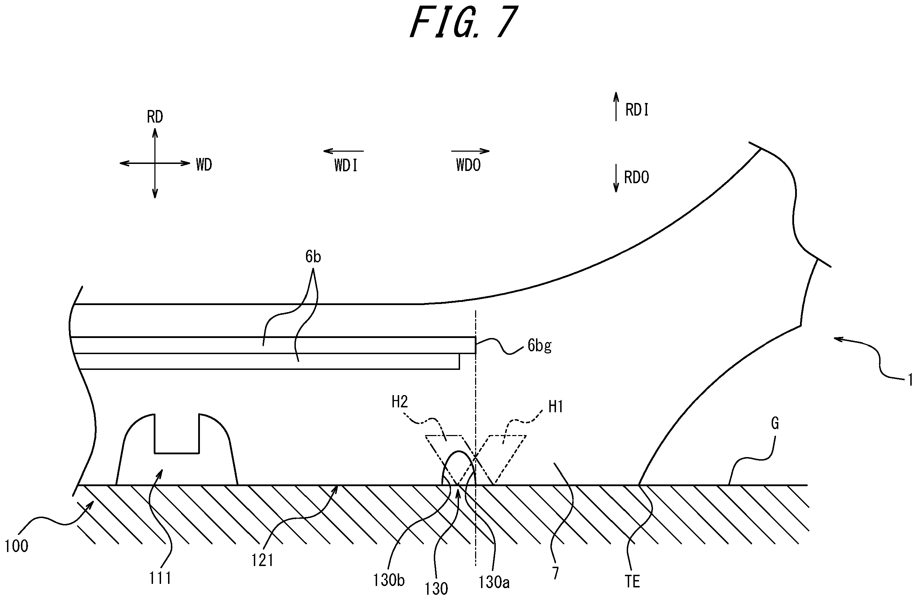

Not limited to the above-mentioned embodiments, as well as the other embodiment illustrated in Figure 6, the outer groove wall 130a of the auxiliary groove 130 may be positioned at the same tire widthwise position as the outermost end in the tire width direction 6bg of the one or more circumferential belt layers 6b included in the belt 6. In this case, as illustrated in Figure 7, when a load is applied to the tire 1, the position of the inward crushing H2 due to the outer groove wall 130a of the auxiliary groove 130 more firmly overlaps the position of the outward crushing H1 due to the outermost end in the tire width direction 6bg of the one or more circumferential belt layers 6b, therefore, the outward crushing H1 can be more effectively offset. Thus, the uneven wear resistance performance can be further improved.

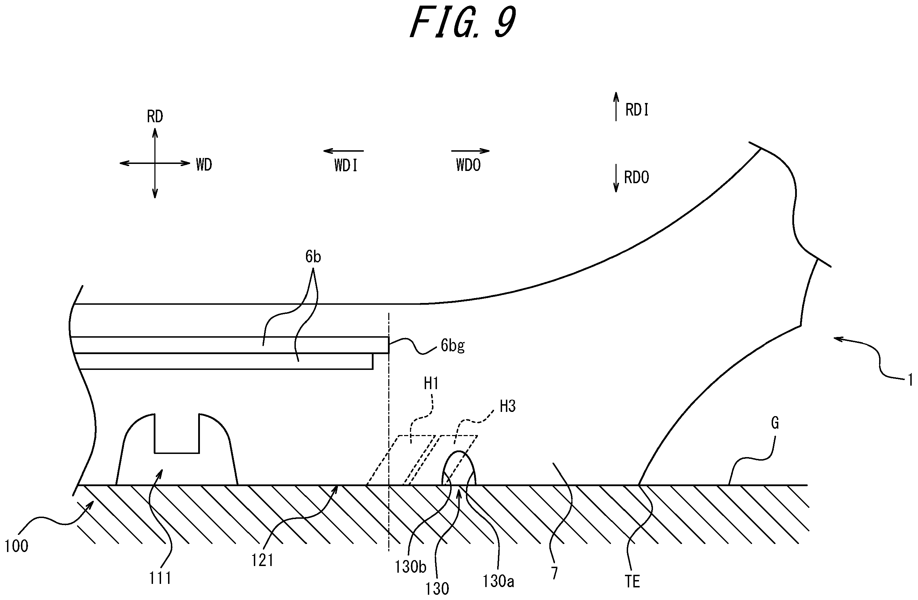

If, as in the other reference example illustrated in Figure 9, the outer groove wall 130a of the auxiliary groove 130 is positioned on the outer side in the tire width direction than the outermost end in the tire width direction 6bg of the one or more circumferential belt layers 6b included in the belt 6, when a load is applied to the tire 1, outward crushing H3 will occur also on the tread rubber 7 near the inner groove wall 130b of the auxiliary groove 130, in the vicinity of the outward crushing H1 due to the outermost end in the tire width direction 6bg of the one or more circumferential belt layers 6b. Therefore, the outward crashing H1 and H3 will be increased, which may worsen uneven wear in the shoulder land portion 121. This is especially true when the inner groove wall 130b of the auxiliary groove 130 is positioned at the same tire widthwise position as the outermost end in the tire width direction 6bg of the one or more circumferential belt layers 6b included in the belt 6.

Note, that when designing the tire 1, it is suitable to set the outer groove wall 130a of the auxiliary groove 130 at a predetermined position on the inner side in the tire width direction than the outermost end in the tire width direction 6bg of the one or more circumferential belt layers 6b. Since there may be slight variations in the tire 1 that is actually manufactured, the relationship between the outer groove wall 130a of the auxiliary groove 130 and the outermost end in the tire width direction 6bg of the one or more circumferential belt layers 6b may deviate slightly from the expected one. By pre-setting the position of the outer groove wall 130a of the auxiliary groove 130 at a predetermined position that is on the inner side in the tire width direction than the outermost end in the tire width direction 6bg of the one or more circumferential belt layers 6b, even if such a slight deviation occurs during manufacturing, it can be more reliably avoided that the outer groove wall 130a of the auxiliary groove 130 is positioned, in the manufactured tire 1, on the outer side in the tire width direction than the outermost end in the tire width direction 6bg of the one or more circumferential belt layers 6b included in the belt 6 (Figure 9).

In each of the embodiments described herein, the tire widthwise distance L from the outer groove wall 130a of the auxiliary groove 130 to the outermost end in the tire width direction 6bg of the one or more circumferential belt layers 6b is suitably 5% or less of the width W of the one or more circumferential belt layers 6b (Figure 1). This tire widthwise distance L may be 0% of the width W as in the embodiment of Figure 6, or may be more than 0% of the width W as in the embodiment of Figure 3.

This allows the inward crushing H2 due to the outer groove wall 130a of the auxiliary groove 130 to be closer to the outward crushing H1 due to the outermost end in the tire width direction 6bg of the one or more circumferential belt layers 6b, which can more effectively offset the outward crushing H1. Thus, the uneven wear resistance performance can be further improved (Figures 5 and 7).

Here, the "width W of one or more circumferential belt layers 6b" (Figure 1) refers to the distance in the tire width direction between the outermost end in the tire width direction 6bg on both sides in the tire width direction of the one or more circumferential belt layers 6b (Figure 3).

In each of the embodiments described herein, when the circumferential belt cords 6bc have a wavy shape as described above (Figure 4), the tire widthwise distance L from the outer groove wall 130a of the auxiliary groove 130 to the outermost end in the tire width direction 6bg of the one or more circumferential belt layers 6b is suitably less than or equal to twice of both amplitudes B of the wavy shape formed by the circumferential belt cords 6bc (Figure 4). This tire widthwise distance L may be zero times the both amplitudes B, as in the embodiment illustrated in Figure 6, or it may be more than zero times the both amplitudes B, as in the embodiment illustrated Figure 3.

This allows the inward crushing H2 due to the outer groove wall 130a of the auxiliary groove 130 to be closer to the outward crushing H1 due to the outermost end in the tire width direction 6bg of the one or more circumferential belt layers 6b, which can more effectively offset the outward crushing H1. Thus, the uneven wear resistance performance can be further improved (Figures 5 and 7).

In each of the embodiments described herein, the tire widthwise distance L from the outer groove wall 130a of the auxiliary groove 130 to the outermost end in the tire width direction 6bg of the one or more circumferential belt layers 6b is suitably 5mm or less. This tire widthwise distance L may be 0 mm as in the embodiment illustrated in Figure 6, or may be more than 0 mm as in the embodiment illustrated Figure 3.

This allows the inward crushing H2 due to the outer groove wall 130a of the auxiliary groove 130 to be closer to the outward crushing H1 due to the outermost end in the tire width direction 6bg of the one or more circumferential belt layers 6b, which can more effectively offset the outward crushing H1. Thus, the uneven wear resistance performance can be further improved (Figures 5 and 7).

This configuration is particularly suitable when the tire 1 is a heavy-duty pneumatic tire (e.g., a truck and bus pneumatic tire).

The outer groove wall 130a of the auxiliary groove 130 may be positioned on the inner side in the tire width direction than each of the outer ends 6be in the tire width direction of the one or more circumferential belt layers 6b.

In each of the embodiments described herein, the groove depth D of the auxiliary groove 130 (Figure 3) is suitably 10% or more of the groove depth E of the outermost main groove 111 (Figure 3). This allows for a more robust effect of the inward crushing H2 due to the outer groove wall 130a of the auxiliary groove 130, further improving uneven wear resistance performance.

In addition, the groove depth D of the auxiliary groove 130 is suitably smaller than the groove depth E of the outermost main groove 111, for example, 30% or less of the groove depth E of the outermost main groove 111. This prevents a reduction in rigidity.

Furthermore, by setting the groove depth D of the auxiliary groove 130 to 10 to 30% of the groove depth E of the outermost main groove 111, the auxiliary groove 130 can be made to disappear after the auxiliary groove 130 has achieved the desired effect to suppress uneven wear (for example, a wear rate of about 20%).

Note, that the groove depth of the grooves (main grooves 110 and auxiliary grooves 130) shall be measured along the direction perpendicular to the tread surface 100. In addition, when the main groove 110 has protrusions 111s and 112s described below on its groove bottom surface, as in the embodiments of Figures 1 and 2, the groove depth of the main groove 110 shall refer to the groove depth of the main groove 110 when the protrusions 111s and 112s are considered absent, in other words, the distance, from the opening surface of the main groove 110 at the tread surface 100, to the inner end of the protrusions 111s and 112s in the tire radial direction.

In each of the embodiments described herein, the groove width of the auxiliary groove 130 is suitably at least 10% of the groove width of the outermost main groove 111. This allows for a more robust effect of inward crushing H2 due to the outer groove wall 130a of the auxiliary groove 130, further improving uneven wear resistance performance.

From the same perspective, the groove width of the auxiliary groove is suitably 1.5mm or more, and more suitably 1.8mm or more.

In addition, the groove width of the auxiliary groove 130 is suitably 20% or less of the groove width of the outermost main groove 111. This prevents a reduction in rigidity.

From the same perspective, the groove width of the auxiliary groove 130 is suitably 2.5 mm or less, and more suitably 2.2 mm or less.

In each of the embodiments described herein, the number of belt layers 6a to 6c included in the belt 6 (the number of layers in the tire radial direction, and five in the embodiment of Figure 1.) is suitably four or more, and more suitably five or more.

In addition, the number of the circumferential belt layers 6b included in the belt 6 (two in the embodiment of Figure 1) is suitably two or more. In this case, the tension step near the outermost end in the tire width direction 6bg of the one or more circumferential belt layers 6b, as described above, is particularly large, so the effect on suppressing the uneven wear of the auxiliary groove 130 is particularly advantageous.

In addition, each of the belt layers 6a to 6c included in the belt 6 suitably has the thickness of 1.3 mm or more, respectively.

These configurations are particularly suitable when the tire 1 is a heavy-duty pneumatic tire (e.g., a truck and bus pneumatic tire).

Note, that in each of the embodiments described herein, with respect to the tread pattern provided on the tread surface 100, as long as the auxiliary groove 130 is provided in the shoulder land portion 121 defined between the outermost main groove 111 and the ground contact edge TE, the effect on suppressing the uneven wear by the above-mentioned auxiliary groove 130 can be obtained. Therefore, the tread pattern on the tread surface 100 may be arbitrary, except that the auxiliary groove 130 is provided in the shoulder land portion 121 which is defined between the outermost main groove 111 and the ground contact edge TE.

In the embodiment of Figure 2, each shoulder land portion 121 is provided with a plurality of one-end-open sipes 121t in addition to the auxiliary groove 130. Each of the plurality of one-end-open sipes 121t opens at one end into the outermost main groove 111, extends outwardly in the tire width direction, and terminates at the other end inside the shoulder land portion 121 before reaching the auxiliary groove 130. In addition, the plurality of one-end-open sipes 121t are spaced from each other along the tire circumferential direction. Each shoulder land portion 121 is not provided with any grooves or sipes other than the auxiliary groove 130 and a plurality of one-end-open sipes 121t.

As in the embodiment of Figure 2, each shoulder land portion 121 is suitably configured as a rib, not divided in the tire circumferential direction by a groove(s) extending along the tire width direction. In this case, the outward crushing H1 (Figure 5) due to the outermost edge in the tire width direction 6bg of the one or more circumferential belt layers 6b described above is more likely to occur significantly, so the effect on suppressing the uneven wear due to the auxiliary grooves is particularly advantageous.

However, each shoulder land portion 121 may be configured as a block row, divided in the tire circumferential direction by a groove(s) extending along the width direction groove.

In the embodiment of Figure 2, each center land portion 122 is provided with a plurality of one-end-open sipes 122t and a plurality of both-end-open sipes 122k, respectively. In each center land portion 122, a plurality of one-end-open sipes 122t, spaced from each other along the tire circumferential direction, open into each of the pair of main grooves 110 that define the center land portion 122. Each of the plurality of one-end-open sipes 122t opens at one end into one of the pair of main grooves 110 that define the center land portion 122, extends in the tire width direction, and terminates at the other end within the center land portion 122. In addition, in each center land portion 122, each of the plurality of both-end-open sipes 122k extends along the tire width direction and opens at both ends into each of the pair of main grooves 110 that define the center land portion 122. The plurality of both-end-open sipes 122k are spaced from each other along the tire circumferential direction. Each center land portion 122 is not provided with any grooves or sipes other than the plurality of one-end-open sipes 122t and the plurality of both-end-open sipes 122k.

As in the embodiment of Figure 2, each center land portion 122 is suitably configured as a rib, not divided in the tire circumferential direction by a groove(s) extending along the tire width direction. In this case, the outward crushing H1 (Figure 5) due to the outermost edge in the tire width direction 6bg of the one or more circumferential belt layers 6b described above is more likely to occur significantly, so the effect on suppressing the uneven wear due to the auxiliary grooves is particularly advantageous. However, each center land portion 122 may be configured as a block row, divided in the tire circumferential direction by a groove(s) extending along the width direction groove.

In the embodiment of Figure 2, each outermost main groove 111 and each center main groove 112 have protrusions 111s and 112s, respectively, on their groove bottoms that protrude outward in the tire radial direction. As illustrated in Figure 1, the outer ends of these projections 111s and 112s in the tire radial direction are located on the inner side than the tread surface 100 in the tire radial direction.

However, each outermost main groove 111 may not have the protrusions 111s on its groove bottom surface. Also, each center main groove 112 may not have the protrusions 112s on its groove bottom surface.

### INDUSTRIAL APPLICABILITY

The tire of the present invention can be used for any type of pneumatic tire, but can suitably be used for heavy-duty pneumatic tires, and even more suitably for truck and bus pneumatic tires.

### REFERENCE SIGNS LIST

- 1: Tire
- 1a: Tread portion
- 1b: Sidewall portion
- 1c: Bead portion
- 4a: Bead core
- 4b: Bead filler
- 5: Carcass
- 5a: Carcass ply
- 6: Belt
- 6a: Intersecting belt layer (Belt layer)
- 6ac: Intersecting belt cord
- 6ar: Intersecting belt coating rubber
- 6b: Circumferential belt layer (Belt layer)
- 6bc: Circumferential belt cord
- 6br: Circumferential belt coating rubber
- 6be: Outer end in the tire width direction
- 6bg: Outermost end in the tire width direction
- 6c: Inclined belt layer (Belt layer)
- 6cc: Inclined belt cord
- 6cr: Inclined belt coating rubber
- 7: Tread rubber
- 8: Side rubber
- 9: Inner liner
- 100: Tread surface
- 110: Main groove
- 111: Outermost main groove
- 111s: Protrusion
- 112: Center main groove
- 112s: Protrusion
- 120: Land portion
- 121: Shoulder land portion
- 121t: One-end-open sipe
- 122: Center land portion
- 122t: One-end-open sipe
- 122k: Both-ends-open sipe
- 130: Auxiliary groove
- 130a: Outer groove wall
- 130b: Inner groove wall
- CL: Tire equatorial plane
- TE: Ground contact edge
- WD: Tire width direction
- WDO: Outer side in the tire width direction
- WDI: Inner side in the tire width direction
- RD: Tire radial direction
- RDO: Outer side in the tire radial direction
- RDI: Inner side in the tire radial direction
- CD: Tire circumferential direction
- G: Road surface

## Claims

1. A tire (1) comprising a belt (6) and a tread surface (100), wherein
the belt (6) has:
a plurality of intersecting belt layers (6a), each containing intersecting belt cords (6ac) extending in a direction that intersects each other between layers; and
one or more circumferential belt layers (6b), each containing circumferential belt cords (6bc) extending along the tire circumferential direction (CD),
the intersecting belt cords (6ac) have an angle of 20° to 45° with respect to the tire width direction (WD),
the tread surface (100) is provided with:
a plurality of main grooves (110), each extending along the tire circumferential direction (CD);
a shoulder land portion (121) defined between an outermost main groove (111), that is located on the outermost side in the tire width direction (6bg) among the plurality of main grooves (110), and a ground contact edge (TE);
an auxiliary groove (130) provided in the shoulder land portion (121), having a narrower width groove than the main grooves (110) and extending along the tire circumferential direction (CD),
an outer groove wall (130a) located on the outer side in the tire width direction (WDO) of a pair of groove walls (130a, 130b) in the auxiliary groove (130) is positioned either at the same tire widthwise position as an outermost end in the tire width direction (6bg) of the one or more circumferential belt layers (6b), or on the inner side in the tire width direction (WDI) than the outermost end in the tire width direction (6bg) of the one or more circumferential belt layers (6b);
**characterized in that**
the shoulder land portion (121) is configured as a rib, not divided in the tire circumferential direction by any groove extending along the tire width direction; and **in that**
a groove depth (D) of the auxiliary groove (130) is 10 to 30% of a groove depth (E) of the outermost main groove (111).

2. The tire (1) according to claim 1, wherein tire widthwise distance (L) from the outer groove wall (130a) in the auxiliary groove (130) to the outermost end in the tire width direction (6bg) of the one or more circumferential belt layers (6b) is 5% or less of the width (W) of the one or more circumferential belt layers (6b).

3. The tire (1) according to claim 1 or 2, wherein the circumferential belt cords (6bc) have a wavy shape, and
the tire widthwise distance (L) from the outer groove wall (130a) in the auxiliary groove (130) to the outermost end in the tire width direction (6bg) of the one or more circumferential belt layers (6b) is less than or equal to twice of both amplitudes (B) of the wavy shape formed by the circumferential belt cords (6bc).

4. The tire (1) according to any one of claims 1 to 3, wherein the tire widthwise distance (L) from the outer groove wall (130a) in the auxiliary groove (130) to the outermost end in the tire width direction (6bg) of the one or more circumferential belt layers (6b) is 5mm or less.

5. The tire (1) according to any one of claims 1 to 4, wherein the outer groove wall (130a) in the auxiliary groove (130) is positioned on the inner side in the tire width direction (WDI) than the outer end (6be) in the tire width direction (WD) of each of the one or more circumferential belt layers (6b).

6. The tire (1) according to any one of claims 1 to 5, wherein the one or more tire circumferential belt layers (6b) are positioned on the inner side in the tire radial direction (RDI) than the plurality of intersecting belt layers (6a).

## Patentansprüche

1. Reifen (1), umfassend einen Gürtel (6) und eine Lauffläche (100), wobei
der Gürtel (6) aufweist:
eine Vielzahl von sich schneidenden Gürtelschichten (6a), die jeweils sich schneidende Gürtelkode (6ac) enthalten, die sich in einer Richtung erstrecken, die einander zwischen den Schichten schneiden; und
eine oder mehrere umlaufende Gürtelschichten (6b), die jeweils umlaufende Gürtelkorde (6bc) enthalten, die sich entlang der Reifen-Umfangsrichtung (CD) erstrecken.
die sich schneidenden Gürtelkorde (6ac) einen Winkel von 20° bis 45° in Bezug zur Reifen-Breitenrichtung (WD) aufweisen,
die Lauffläche (100) bereitgestellt ist mit:
einer Vielzahl von Hauptrillen (110), die sich jeweils entlang der Reifen-Umfangsrichtung (CD) erstrecken;
einem Schulterflächenabschnitt (121), der zwischen einer äußersten Hauptrille (111), die sich auf der äußersten Seite in Reifen-Breitenrichtung (6bg) unter der Vielzahl von Hauptrillen (110) befindet, und einer Bodenkontaktkante (TE) definiert ist;
einer Hilfsrille (130), die im Schulterflächenabschnitt (121) bereitgestellt ist, die eine Rille mit schmalerer Breite als die Hauptrillen (110) aufweist und sich entlang der Reifen-Umfangsrichtung (CD) erstreckt,
eine äußere Rillenwand (130a), die sich auf der Außenseite in der Reifen-Breitenrichtung (WDO) eines Paares von Rillenwänden (130a, 130b) in der Hilfsrille (130) in Reifenbreitenrichtung (WDO) befindet, entweder an der gleichen Position in Reifen-Breitenrichtung wie ein äußerstes Ende (6bg) der einen oder mehreren umlaufenden Gürtelschichten (6b) oder auf der Innenseite in der Reifen-Breitenrichtung (WDI) als das äußerste Ende (6bg) der einen oder mehreren umlaufenden Gürtelschichten (6b) positioniert ist;
**dadurch gekennzeichnet, dass**
der Schulterflächenabschnitt (121) als Rippe konfiguriert ist, die in Reifen-Umfangsrichtung nicht durch eine sich entlang der Reifen-Breitenrichtung erstreckende Rille unterteilt ist; und dadurch, dass
eine Rillentiefe (D) der Hilfsrille (130) 10 bis 30% der Rillentiefe (E) der äußersten Hauptrille (111) beträgt.

2. Reifen (1) nach Anspruch 1, wobei der Abstand (L) in der Breite von der äußeren Rillenwand (130a) in der Hilfsrille (130) bis zum äußersten Ende der Reifen-Breitenrichtung (6bg) der einen oder mehreren umlaufenden Gürtelschichten (6b) 5% oder weniger der Breite (W) der einen oder mehreren umlaufenden Gürtelschichten (6b) beträgt.

3. Reifen (1) nach Anspruch 1 oder 2, wobei die umlaufenden Gürtelkorde (6bc) eine wellenförmige Gestalt aufweisen, und
der Abstand (L) in der Breite von der äußeren Rillenwand (130a) in der Hilfsrille (130) bis zum äußersten Ende der Reifen-Breitenrichtung (6bg) der einen oder mehreren umlaufenden Gürtelschichten (6b) geringer als oder gleich dem Doppelten von beiden Amplituden (B) der von den umlaufenden Gürtelkorden (6bc) gebildeten welligen Gestalt beträgt.

4. Reifen (1) nach einem der Ansprüche 1 bis 3, wobei der Abstand (L) in der Breite von der äußeren Rillenwand (130a) in der Hilfsrille (130) bis zum äußersten Ende der Reifen-Breitenrichtung (6bg) der einen oder mehreren umlaufenden Gürtelschichten (6b) 5mm oder weniger beträgt.

5. Reifen (1) nach einem der Ansprüche 1 bis 4, wobei die äußere Rillenwand (130a) in der Hilfsrille (130) auf der inneren Seite in der Reifen-Breitenrichtung (WDI) als dem äußeren Ende (6be) in der Reifen-Breitenrichtung (WD) jeder der einen oder mehreren umlaufenden Gürtelschichten (6b) positioniert ist.

6. Reifen (1) nach einem der Ansprüche 1 bis 5, wobei die eine oder mehrere umlaufende Gürtelschichten (6b) des Reifens auf der inneren Seite in der radialen Reifenrichtung (RDI) als der Vielzahl von sich schneidenden Gürtelschichten (6a) positioniert sind.

## Revendications

1. Pneumatique (1) comprenant une nappe (6) et une surface de bande de roulement (100), dans lequel
la nappe (6) présente :
une pluralité de couches de nappe transversale (6a), chacune contenant des câbles de nappe transversale (6ac) s'étendant dans une direction qui se recoupe entre les couches ; et
une ou plusieurs couches de nappe circonférentielle (6b), chacune contenant des câbles de nappe circonférentielle (6bc) s'étendant le long de la direction circonférentielle du pneumatique (CD),
les câbles de nappe transversale (6ac) présentent un angle de 20° à 45° par rapport à la direction de la largeur du pneumatique (WD),
la surface de bande de roulement (100) est munie de :
une pluralité de rainures principales (110), chacune s'étendant le long de la direction circonférentielle du pneumatique (CD) ;
une section de portée d'épaulement (121) définie entre une rainure principale la plus externe (111), qui est située du côté le plus externe dans la direction de la largeur du pneumatique (6bg) parmi la pluralité de rainures principales (110), et un bord de contact avec le sol (TE) ;
une rainure auxiliaire (130) prévue dans la section de portée d'épaulement (121), présentant une largeur de rainure plus étroite que les rainures principales (110) et s'étendant le long de la direction circonférentielle du pneumatique (CD),
une paroi de rainure extérieure (130a) située du côté extérieur dans la direction de la largeur du pneumatique (WDO) d'une paire de parois de rainure (130a, 130b) dans la rainure auxiliaire (130) est positionnée soit à la même position dans la largeur du pneumatique qu'une extrémité extérieure dans la direction de la largeur du pneumatique (6bg) des une ou plusieurs couches de nappe circonférentielle (6b), soit du côté intérieur dans la direction de la largeur du pneumatique (WDI) que l'extrémité extérieure dans la direction de la largeur du pneumatique (6bg) des une ou plusieurs couches de nappe circonférentielle (6b) ;
**caractérisé en ce que**
la section de portée d'épaulement (121) est configurée comme une nervure, non divisée dans la direction circonférentielle du pneumatique par une rainure s'étendant dans la direction de la largeur du pneumatique ; et en ce
une profondeur de rainure (D) de la rainure auxiliaire (130) est de 10 à 30 % d'une profondeur de rainure (E) de la rainure principale la plus externe (111).

2. Pneumatique (1) selon la revendication 1, dans lequel la distance en largeur (L) entre la paroi de rainure extérieure (130a) dans la rainure auxiliaire (130) et l'extrémité extérieure dans la direction de la largeur (6bg) des une ou plusieurs couches de nappe circonférentielle (6b) est 5 % ou moins de la largeur (W) des une ou plusieurs couches de nappe circonférentielle (6b).

3. Pneumatique (1) selon la revendication 1 ou 2, dans lequel les câbles de nappe circonférentielle (6bc) présentent une forme ondulée, et
la distance en largeur du pneu (L) de la paroi de rainure extérieure (130a) dans la rainure auxiliaire (130) à l'extrémité extérieure dans la direction de la largeur du pneumatique (6bg) des une ou plusieurs couches de nappe circonférentielle (6b) est inférieure ou égale à deux fois les deux amplitudes (B) de la forme ondulée formée par les câbles de nappe circonférentielle (6bc).

4. Pneumatique (1) selon l'une quelconque des revendications 1 à 3, dans lequel la distance en largeur du pneumatique (L) de la paroi de rainure extérieure (130a) dans la rainure auxiliaire (130) à l'extrémité extérieure dans la direction de la largeur du pneumatique (6bg) des une ou plusieurs couches de nappe circonférentielle (6b) est de 5 mm ou moins.

5. Pneumatique (1) selon l'une quelconque des revendications 1 à 4, dans lequel la paroi de rainure extérieure (130a) dans la rainure auxiliaire (130) est positionnée du côté intérieur dans la direction de la largeur du pneumatique (WDI) que l'extrémité extérieure (6be) dans la direction de la largeur du pneumatique (WD) de chacune des une ou plusieurs couches de nappe circonférentielle (6b).

6. Pneumatique (1) selon l'une quelconque des revendications 1 à 5, dans lequel les une ou plusieurs couches de nappe circonférentielle du pneumatique (6b) sont positionnées sur le côté intérieur dans la direction radiale du pneumatique (RDI) plutôt que la pluralité de couches de nappe transversale (6a).
